Europäisches Patentamt

(19) European Patent Office    (11) Publication number:  **0 107 266**

Office européen des brevets                          **B1**

(12)                    **EUROPEAN PATENT SPECIFICATION**

(45) Date of publication of patent specification: **10.12.86**    (51) Int. Cl.⁴: **H 02 M 1/14, H 01 F 37/02**

(21) Application number: **83303565.2**

(22) Date of filing: **21.06.83**

(54) **Output filter having swinging inductor.**

(30) Priority: **06.07.82 CA 406719**

(43) Date of publication of application:
**02.05.84 Bulletin 84/18**

(45) Publication of the grant of the patent:
**10.12.86 Bulletin 86/50**

(84) Designated Contracting States:
**AT DE FR GB NL SE**

(56) References cited:
**EP-A-0 012 629**
**DE-A-2 403 114**
**US-A-3 603 864**

**IBM TECHNICAL DISCLOSURE BULLETIN, vol.
24, no. 11B, April 1982, New York H.A. HIGUCHI
"Wide-range swinging inductor", page 6206**

(73) Proprietor: **NORTHERN TELECOM LIMITED**
**1600 Dorchester Boulevard West**
**Montreal Quebec H3H 1R1 (CA)**

(72) Inventor: **Pollard, Brian Joseph**
**93 Grenfell Crescent**
**Nepean Ontario, K2G 0G5 (CA)**

(74) Representative: **Crawford, Andrew Birkby et al**
**A.A. THORNTON & CO. Northumberland House**
**303-306 High Holborn**
**London WC1V 7LE (GB)**

## Description

This invention relates generally to the field of "swinging chokes" or "swinging inductors", and more particularly to the use of such chokes with a switched-mode power supply (e.g. a pulse width modulated power supply).

In order to maintain good output regulation in multi-output switched-mode power supplies, swinging chokes are commonly used. For a multi-output switched-mode power supply, if series regulation of the outputs is not used, proper regulation can become a problem at low load currents (typically around 10% of full rated load); this difficulty in proper regulation is believed to be due to discontinuous current flow in the output filter choke. In order to maintain a good regulation characteristic (without using series regulation) one solution has been to have a "bleed" load, consisting of a resistor, permanently connected so as to carry at least the critical current of the output filter choke. Note that the critical current is defined as that current below which discontinuous current flow in the output filter choke of the power supply occurs.

It can be appreciated that using a "bleed" load is an inefficient manner of operating a power supply and results in additional (and usually unwanted) heat dissipation.

The magnitude of the critical current can be reduced by increasing the inductance value of the output filter choke. Normally this is not done for two reasons. Firstly, the choke itself would become bulkier and have more loss, and secondly, the control loop bandwidth would be reduced.

The preferred solution has been the use of a "swinging choke", placed in series with the filter choke. The swinging choke is so called because it is designed to swing (alternate) between a relatively small inductance when the current is above the critical current (i.e. the swinging choke saturates), and a relatively large inductance when the current is below the critical current. This results in the critical current being reduced to a low value, determined by the higher combined inductance (before the swinging choke saturates).

A swinging choke used for such a purpose is characterized by a core having an air gap. The air gap in the core is optimized: too wide a gap and the inductance of the switching choke is too small; too narrow a gap and the choke saturates at too low a current magnitude.

One attempt to optimize the air gap size is to use a core having a stepped-gap. The article "Characterization, Modeling and Design of Swinging Inductors for Power Conversion Applications" by J. M. Dishman et al on pages B-3 page 1 to B-3 page 13 of the *Proceedings of Powercon 8* (1981, Power Concepts inc., P.O. Box 5226, Ventura, California 93003) depicts one such stepped-gap design.

### Summary of the Invention

The present invention is directed to a swinging choke of different construction to the aforementioned conventional swinging chokes. This different construction results in reducing the magnitude of the critical current to an even smaller magnitude than does the conventional swinging choke. In more detail, the swinging choke of the present invention employs a gapless core and the $A_L$ (inductance factor) is no longer optimized but rather is made large.

Stated in other terms, the present invention is an output filter for a switched-mode power supply having a direct current output, the filter comprising at least two inductors connected in a series circuit relationship, one inductor being a swinging inductor characterized in that said swinging inductor has a closed magnetic core having effectively no air gaps.

### Brief Description of the Drawings

The present invention will now be described in more detail with reference to the accompanying drawings, wherein like parts in each of the several figures are identified by the same reference character and wherein:

Figure 1 is a simplified schematic of a prior art application of a swinging choke;

Figure 2 is a simplified representation of a prior art swinging choke suitable for use in the Figure 1 embodiment; and

Figure 3 is a simplified representation of a swinging choke constructed according to the present invention and suitable for use in the Figure 1 embodiment.

### Detailed Description

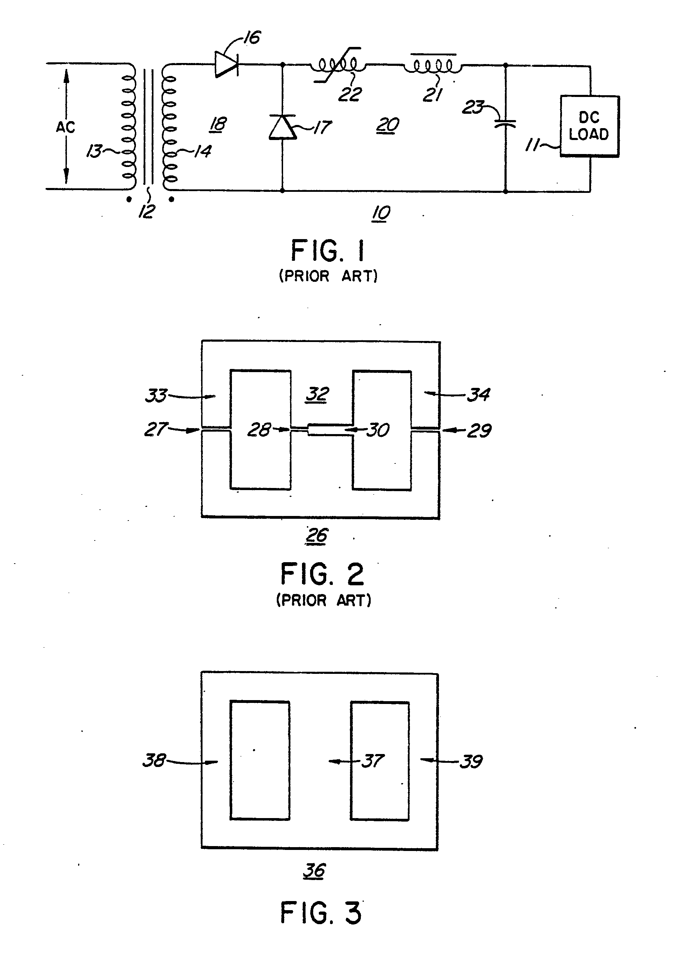

Figure 1 depicts a not untypical simplified prior art output circuit 10 of a switched-mode power supply connected to a load 11. Output circuit 10 comprises a transformer 12, with windings 13 and 14 as depicted. Diodes 16 and 17 form a half-wave rectifier 18. Output filter 20 is comprised of inductor (or choke) 21, swinging inductor 22, and capacitor 23.

Figure 2 depicts one example of a prior art core 26 for a swinging inductor having an air gap. In this particular instance, the air gap is stepped, and there are in effect four distinct air gaps, namely: air gaps 27, 28, and 29 being of the same size, and air gap 30 being significantly larger. Core 26 can be considered as having a centre leg 32, and outer legs 33 and 34. Outer leg 33 contains air gap 27; outer leg 34 contains air gap 29; and centre leg 32 contains both air gaps 28 and 30. Such a core is depicted and described in the aforementioned article by Dishman et al.

Figure 3 depicts a core 36 for a swinging inductor constructed according to the present invention. It will be noted that core 36 of Figure 3 is identical to core 26 of Figure 2, except for the fact that core 36 has no air gaps. Core 26 has a centre leg 37 and outer legs 38 and 39. The inductor winding (not shown) is wound around centre leg 37 in a conventional fashion.

## Claims

1. An output filter (20) for a switched-mode power supply having a direct current output, said filter comprising at least two inductors (21, 22) connected in a series circuit relationship, one said inductor being a swinging inductor (22) characterized in that said swinging inductor has a closed magnetic core (36) having effectively no air gaps.

2. The output filter of claim 1 wherein said two inductors are connected in series with a direct current load and further including a capacitance (23) connected in parallel to said load.

3. An output filter (20) for a switched-mode power supply having a direct current output, said filter comprising at least two inductors (21, 22) connected in a series circuit relationship, one said inductor being a swinging inductor (22) characterized by having a magnetic core (36) that has a continuous magnetic path with no air gaps.

## Patentansprüche

1. Ausgangsfilter (20) für eine Leistungsversorgung für Tastbetrieb mit einem Gleichstromausgang, mit mindestens zwei Induktivitäten (21, 22) die in einer Reihenschaltungs-Beziehung verbunden sind, wobei eine Induktivität eine Schwingdrossel (22) ist, dadurch gekennzeichnet, daß die Schwingdrossel einen geschlossenen Magnetkern (36) mit effektiv keinen Luftspalten besitzt.

2. Ausgangsfilter nach Anspruch 1, bei dem zwei Induktivitäten in Reihe mit einer Gleichstromlast geschaltet sind und weiter ein parallel zur Last angeschlossener Kondensator (23) enthalten ist.

3. Ausgangsfilter (20) für eine Leistungsversorgung für Tastbetrieb mit einem Gleichstromausgang, wobei das Filter mindestens zwei in Reihenschaltungs-Beziehung angeschlossene Induktivitäten (21, 22) enthält, und ein Induktor eine Schwingdrossel (22) ist, dadurch gekennzeichnet, daß die Schwingdrossel einen Magnetkern (36) mit einem kontinuierlichen Magnetweg ohne Luftspalte besitzt.

## Revendications

1. Filtre de sortie (20) pour alimentation à mode commuté ayant une sortie en courant continu, ce filtre comprenant au moins deux inducteurs (21, 22) connectés dans une relation par circuit en série, l'un desdits inducteurs étant un inducteur oscillant (22) caractérisé en ce que cet inducteur oscillant a un noyau magnétique fermé (36) ne comportant effectivement aucun entrefer.

2. Filtre de sortie selon la revendication 1, dans lequel les deux inducteurs sont connectés en série avec une charge en courant continu et comprenant en outre un condensateur (23) monté en parallèle avec la charge.

3. Filtre de sortie (20) pour alimentation dans le mode commuté ayant une sortie en courant continu, ce filtre comportant au moins deux inducteurs (21, 22) connectés dans une relation par circuit en série, l'un desdits inducteur étant un inducteur oscillant (22) caractérisé en ce qu'il comporte un noyau magnétique (36) qui présente un trajet magnétique continu sans entrefer.

FIG. 1
(PRIOR ART)

FIG. 2
(PRIOR ART)

FIG. 3